**Europäisches Patentamt**

**European Patent Office**

**Office européen des brevets**

(19)

(11) Publication number : **0 421 304 B1**

(12) # EUROPEAN PATENT SPECIFICATION

(45) Date of publication of patent specification :
**07.12.94 Bulletin 94/49**

(51) Int. Cl.[5] : **G01J 3/36,** G01N 21/35, G01N 21/61

(21) Application number : **90118708.8**

(22) Date of filing : **28.09.90**

(54) Infrared ray detector.

(30) Priority : **30.09.89 JP 255539/89**

(43) Date of publication of application :
**10.04.91 Bulletin 91/15**

(45) Publication of the grant of the patent :
**07.12.94 Bulletin 94/49**

(84) Designated Contracting States :
**DE GB**

(56) References cited :
**EP-A- 0 123 458
EP-A- 0 226 569
DE-A- 3 608 122
US-A- 3 860 344
US-A- 4 829 183**

(73) Proprietor : **HORIBA, LTD.
2 Miyanohigashi-machi
Kissyoin
Minami-ku Kyoto (JP)**

(72) Inventor : **Ishida, Masahiko
2-2-65, Kugai,
Nagaokakyo-city
Kyoto (JP)**
Inventor : **Ohnishi, Toshikazu
495-8, Heso,
Ritto-cho
Kurita-gun, Shiga-Prefecture (JP)**
Inventor : **Takada, Syuji
100-1, Kego,
Iseda-cho
Uji-city, Kyoto (JP)**
Inventor : **Miyatake, Kimio
352, Kitayoko-cho,
Teramachi-Kamidachiuri
Kamikyo-ku, Kyoto (JP)**

(74) Representative : **TER MEER - MÜLLER -
STEINMEISTER & PARTNER
Mauerkircherstrasse 45
D-81679 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 421 304 B1

## Description

The invention relates to an infrared detector as stated in the preamble of claim 1.

An infrared ray detector of this kind is already known from US PS 4,593,197. This known infrared ray detector comprises:

- four infrared ray detecting elements,
- a holder having four housing portions each for receiving one of said infrared ray detecting elements, and
- four optical filters each in front of one of said infrared ray detecting elements and for closing a mouth portion of said housing portion, said optical filters are transmissible to wavelength bands of infrared rays absorbed by a HC gas, a $CO_2$ gas, a CO gas and a standard gas.

A further infrared absorption gas detector is disclosed in EP-A2-0 123 458. A monitoring head for such a gas detector includes a source of infrared radiation, two detector elements for detecting infrared radiation formed by the two elements of a dual element detector, an optical path which extends between the source and the detector elements and which includes a gas sample volume, and selectively transmitting spectral filters immediately in front of the detector elements of the dual element detector to filter the radiation impinging on the detector elements. The dual element detector together with the filters is positioned in a recess of the monitoring head which is closed by an infrared transparent material positioned in front of the detector elements.

In addition, it is known from US-PS 3,860,344 to have a plurality of infrared detectors in separate compartments in a common housing and to provide for each detector a separate temperature sensor combined with a mounting base of said detector.

It is an object of the present invention to develop the infrared ray detector mentioned in the preamble of claim 1 such that it has a reduced size while simultaneously showing a higher and more uniform sensitivity.

The solution of this object is stated in the characterizing portion of claim 1, whereas favourable improvements are claimed in the remaining sub claims.

The infrared ray detector according to the invention is characterized in that:

- each housing portion has a groove-like shape,
- the holder is positioned in a sealed case such, that the optical filters facing an opening of said case which is closed by a window material transmissible to infrared rays.
- the holder is made of a highly heat conductive material and mounted with its bottom side on a temperature regulating means, and
- a central wavelength and a half-bandwidth of said wavelength bands of infrared rays transmissible trough the respective optical filters are set within a range of the following standard values ± about 5 %:

> Optical filter for use in HC:
>> Central wavelength: 3.4 μm;
>> Half-bandwidth: 8.6 %
> Optical filter for use in $CO_2$:
>> Central wavelength: 4.3 μm;
>> Half-bandwidth: 4.2 %
> Optical filter for use in CO:
>> Central wavelength: 4.7 μm;
>> Half-bandwidth: 8.6 %
> Optical filter for use in the standard gas:
>> Central wavelength: 3.8 μm;
>> Half-bandwidth: 3.0 %,

wherein the half-bandwidth is defined as follows [(width of the wavelength band at at half times the Peak-transmittance/central wavelength of the wavelength band) x 100].

With the infrared ray detector of the invention it is possible to measure HC, $CO_2$ and CO gas components so that this detector can be used for measuring the main components of the exhaust gas from vehicles.

As detecting elements, quantum type-, pyroelectric-, pyro- and thermopile infrared ray detecting elements, such as PbSE, PbS and InSb, and the like can optionally be used.

The temperature regulating means is arranged below the window material and the holder made, for example, from metal, is mounted on a surface of the temperature regulating means which faces to the window material.

Since the holder of the infrared ray detecting elements is provided with the temperature regulating means on one side thereof and the optical filters on the other side thereof, the distances between the respective optical filters and the corresponding temperature regulating means are almost the same and the heat conductance between the holder and the optical filters is smoothly made progress, whereby the regulation of all optical filters in temperature can be uniformly carried out.

In addition, since the central wavelength and the half-bandwidth of the wavelength band of the infrared rays transmissible through the respective optical filters is set as above described, respectively, a quantity of measuring signals is increased and thus the sensitivity is enhanced.

Preferred embodiments of the present invention are shown in the drawings, in which

Figure 1 is a sectional front view;

Fig. 2 is a partially cut off sectional plan view showing optical filters;

Fig. 3 is an enlarged front view showing the optical filters;

Fig. 4 is an enlarged plan view showing the optical filters;

Fig. 5 is a diagram showing a relation between an absorption spectrum of a sample gas and the optical filters; and

Fig. 6 is an enlarged front view showing optical filters comprising one piece of substrate.

## DESCRIPTION OF THE PREFERRED EMBODIMENTS

The preferred embodiments of the present invention will be below described with reference to the drawings.

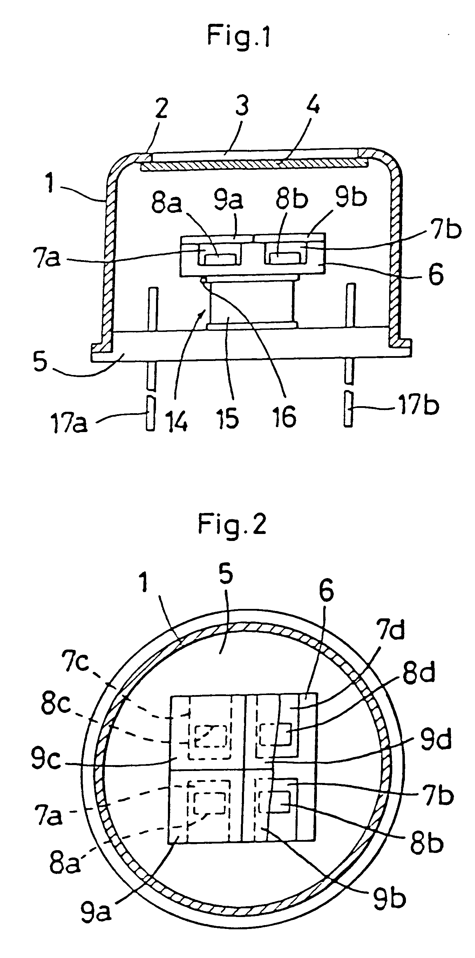

Referring to the drawings, reference numeral 1 (Figs.1,2) designates a cylindrical case made of metals and the like. An opening portion 3 formed on an end portion wall 2 of said case 1 being closed with a window material 4, such as sapphire, transmissible to infrared rays, and an inner surface of said case 1 being roughened by means of the sandblasting, the blackening treatment for roughening a surface and the like so as to absorb infrared rays. The case 1 is sealed up with a stem 5 and $N_2$ or dry air is enclosed in the case 1 to prevent a change with the lapse of time.

Reference numeral 6 designates a holder made of highly heat-conductive materials, such as aluminum, arranged in the case 1 below said window material 4, said holder 6 being provided with four groove-like housing portions 7a, 7b, 7c, 7d with one end closed and the other end opened, and said respective housing portions 7a, 7b, 7c, 7d being provided with PbSe's 8a, 8b, 8c, 8d as an infrared ray detecting elements housed therein.

Reference numerals 9a, 9b, 9c, 9d designate optical filters placed on a mouth portion of the housing portions 7a, 7b, 7c, 7d to be mounted on the holder 6 for selecting a wavelength band of infrared rays incident upon said respective PbSe's 8a, 8b, 8c, 8d, said optical filter 9a being for HC, said optical filter 9b being for $CO_2$, said optical filter 9c being for CO, and said optical filter 9d being for the standard gas.

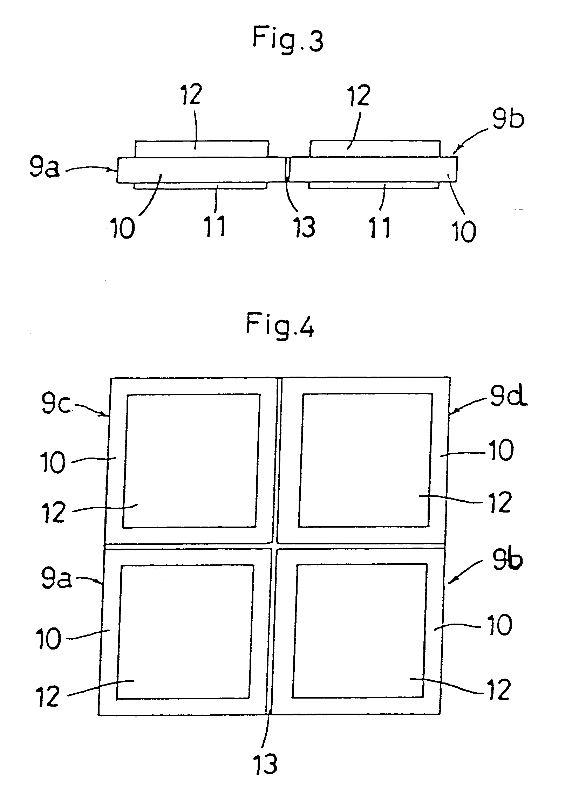

In the optical filters 9a, 9b, 9c, 9d, as shown in Figs. 3, 4, a band pass surface 11 (hereinafter referred to as BP surface) transmissible to an appointed wavelength band of infrared rays depending upon said respective ingredients to be measured is formed on one side of substrates 10 all made of Si and having the same thickness while a short-long cut surface 12 (hereinafter referred to as SLC surface) cutting a short wavelength band and a long wavelength band to remove noise ingredients other than said transmission bands is formed on the other side of said substrates 10. Said BP surface 11 and said SLC surface 12 is formed of a multi-layer film and the like made of germanium (Ge) and silicon monoxide (SiO), respectively.

And, a central wavelength and a half-bandwidth of the respective wavelength bands of infrared rays transmissible through the optical filters 9a, 9b, 9c, 9d are set as follows:

Optical filter 9a for HC:
Central wavelength: 3.4 μm;
Half-bandwidth: 8.6 %

Optical filter 9b for $CO_2$:
Central wavelength: 4.3 μm;
Half-bandwidth: 4.2 %

Optical filter 9c for CO:
Central wavelength: 4.7 μm;
Half-bandwidth: 8.6 %

Optical filter 9d for the standard gas:
Central wavelength: 3.8 μm;
Half-bandwidth: 3.0 %

The optical filters 9a, 9b, 9c, 9d having the above described construction are integrally adhered to each other with adhesives at end faces thereof so that the respective substrates 10 may form one surface and closely adhered to the holder 6 with adhesives corresponding to the respective PbSe's 8a, 8b, 8c, 8d, as shown in Fig. 3.

Reference numeral 14 designates temperature-regulating means comprising a thermo-module 15 mounted on the stem 5 and a thermistor 16 overlapped on said thermo-module 15, said thermistors 16 being mounted on surfaces facing to the optical filters 9a, 9b, 9c, 9d of the holder 6. Reference numerals 17a, 17b designate lead pins passing through the stem 5. The connection of lead wires with said lead pins 17a, 17b is not shown.

In the infrared ray detector having the above described construction, the infrared rays, which are transmitted through the window materials 4, selectively transmit through the respective optical filters 9a, 9b, 9c, 9d to be incident upon the respective PbSe's 8a, 8b, 8c, 8d, whereby simultaneously and separately detecting the respective infrared rays.

Although PbSe's 8a, 8b, 8c, 8d are used as the infrared ray detecting element in this infrared ray detector, the temperature of the PbSe's 8a, 8b, 8c, 8d is held almost constant through the holder 6 by means of the thermistor 16 and the thermo-module 15, so that the infrared rays can be detected in high selectivity.

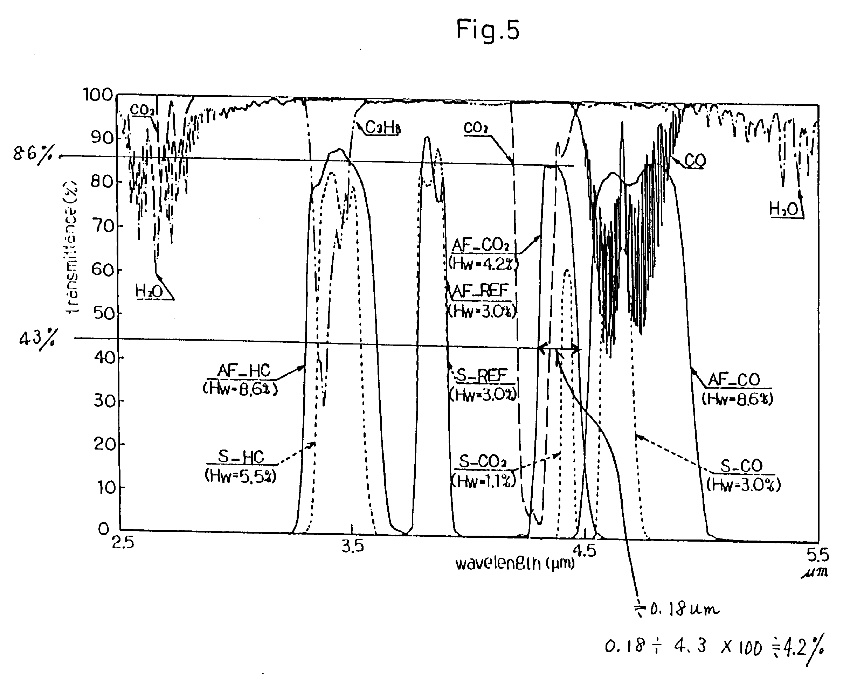

Fig. 5 shows relations between absorption spectrums of the respective gases and the optical filters 9a, 9b, 9c. 9d. In addition, also the respective optical filters for HC, $CO_2$, CO and the standard gas, which have been conventionally used, are described for comparison in this Fig. 5. Accordingly, the optical filters 9a, 9b, 9c, 9d in this preferred embodiment are shown by adding AF before the respective components to be measured and the standard gas (shown by REF) and the conventional respective optical filters are shown by adding S before the respective ingredients to be measured and the standard gas (shown by REF).

As obvious from Fig. 5, both the central wavelength and the half-bandwidth of the wavelength band transmissible through the optical filter 9d for the standard gas are almost the same as those of the conventional optical filter. However, the half-bandwidths of other filters 9b, 9c, 9d are set at values considerably larger than those of the conventional optical filter.

These respective central wavelengths and half-bandwidths have been found in order to achieve an object of improving the sensitivity. The setting of the central wavelengths and the half-bandwidths of the optical filters 9a, 9b, 9c, 9d in the above described manner has led to an increase of the quantity of measuring signal and thus to the possibility of detecting the respective infrared rays in high sensitivity.

And, a highly sensitive infrared ray detector exhibiting a high-speed response and a high selectivity can be obtained by using the PbSe's 8a, 8b, 8c, 8d as the infrared ray detecting element as in this preferred embodiment.

Since three components, that is HC, $CO_2$ and CO, can be simultaneously detected in high selectivity and high sensitivity in such the manner, the infrared ray detector according to said preferred embodiment can be used as for example an air-to-fuel ratio meter exhibiting a high-speed response.

Although PbSe is used as the infrared ray detecting element in this preferred embodiment, this aims at the practical application of the high-speed response of PbSe, so that also the pyrosensor and the like can be used as the infrared ray detecting element.

As above described, in this infrared ray detector, all of the substrates 10 composing the respective optical filters 9a, 9b, 9c, 9d have the same thickness and are adhered to each other at the respective end faces thereof to form one piece of plate, as shown in Fig. 3, so that there is not the possibility that the infrared rays are leaked from the respective adhered end faces of the substrates 10 when said infrared rays are incident upon the optical filters 9a, 9b, 9c, 9d and thus the interference can be avoided. In addition, since four pieces of optical filters 9a, 9b, 9c, 9d are arranged on one surface, they can be easily mounted on the holder 6 without forming gaps and it is possible also to prevent the leakage of lights from the surface where the optical filters 9a, 9b, 9c, 9d are mounted on the holder 6.

If all of said substrates 10 are made of the same material, such as Si, the manufacturing conditions of the respective substrates 10 and the like are same, so that the thicknesses of all of the substrates 10 can be easily equalized. In addition, in the case of Si, the cutting is relatively easy, the quantity of chippings produced by this cutting being reduced, and the size of chippings produced being relatively small, so that it is possible to more surely prevent the leakage of lights from the adhered end faces of the respective substrates 10 adhered to each other.

Every material, such as Ge, transmissible to infrared rays can be used as a material forming the substrates 10.

In this infrared ray detector, the PbSe's 8a, 8b, 8c, 8d are housed in the housing portions 7a, 7b, 7c. 7d of the holder made of a highly heat-conductive material, such as aluminum, respectively, the optical filters 9a, 9b, 9c, 9d being contactedly mounted on the holder 6, and temperature-regulating means 14 being mounted on a side opposite to the optical filters 9a, 9b, 9c, 9d of the holder 6.

Accordingly, in the case where the temperature of the holder 6 is detected by the thermistor 16 and the holder 6 is regulated at an appointed temperature by means of the thermo-module 15 depending upon the detected temperature, the holder 6 can be almost uniformly and effectively regulated in temperature all over it and also the temperature of all of the PbSe's 8a, 8b, 8c, 8d can be held constant. Moreover, since the optical filters 9a, 9b, 9c, 9d are contactedly mounted on the surface facing to the temperature-regulating means 14 of the holder 6, the heat-conductance between the holder 6 and the optical filters 9a, 9b, 9c, 9d can be smoothly carried out and the distances from all of the optical filters 9a, 9b, 9c, 9d to the corresponding temperature-regulating means 14 are almost equal, whereby it is possible that all of the optical filters 9a, 9b, 9c, 9d can be uniformly regulated in temperature to hold them at the constant temperature.

As above described, since all of the optical filters 9a, 9b, 9c, 9d can be uniformly held at the constant temperature, it is surely possible to prevent the shift of their spectral characteristics to longer wavelengths due to changes in temperature. In addition, since the optical filters 9a, 9b, 9c, 9d are uniformly transmissible to the appointed wavelength bands of infrared rays specified for them, infrared rays can be detected in high selectivity and high sensitivity and the interference value can be reduced.

Moreover, if all of the optical filters 9a, 9b, 9c, 9d are made of the same material, such as Si, and integrally adhered to each other at the end faces thereof, the expansion coefficient and the thermal conductivity of the respective substrates 10 are made uniform and thus the temperature characteristics are improved. Accordingly, the temperature-regulation of the optical filters 9a, 9b, 9c. 9d through the holder 6 can be more effectively and uniformly achieved and thus all of the optical filters 9a, 9b, 9c, 9d can be surely held at the constant temperature.

Furthermore, in the infrared ray detector according to this preferred embodiment, PbSe's 8a, 8b, 8c, 8d are housed in the groove-like housing portions 7a, 7b, 7c, 7d closed at one end provided in the holder 6 arranged in the case 1

Accordingly, even the infrared rays which have transmitted through the window material 4 to be incident upon the inside of the case 1, i.e. those which have become stray rays, are reflected by the side surfaces of the holder 6 and the like so as not to be incident upon the PbSe's 8a, 8b, 8c, 8d, so that the influences by the interference resulting from the incidence of said stray rays upon the PbSe's 8a, 8b, 8c, 8d and the like can be prevented.

Besides, the coloring of the holder 6 in black to absorb said stray light incident upon the holder 6 is suitable for the elimination of the influences by the stray light.

In addition, if the inner surface of the case 1 is roughened by the sandblasting, the blackening treatment for roughening the surface or the like so as to absorb infrared rays without reflecting them, when the infrared rays, which have been incident upon the inside of the case 1 to become the stray light, are incident upon the inner surface of the case 1 in the above described manner, the stray light is absorbed without being reflected, so that the incidence of the stray light upon the PbSe's 8a, 8b, 8c, 8d can be more surely prevented and thus the interference resulting from the stray light can be more surely prevented, whereby infrared rays can be detected in high accuracy.

As described , the coloring of the holder 6 in black to absorb the stray light incident upon the holder 6 is more effective.

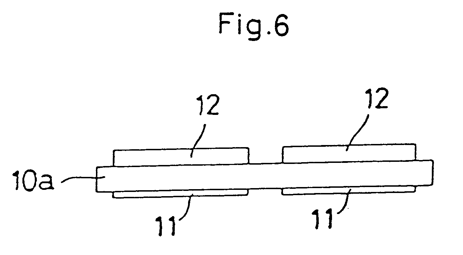

In addition, if a piece of substrate 10a made of for example Si is provided with a required number of BP surface 11 and SLC surface, respectively, as shown in Fig. 6, the problem of the steps brought about in the case, where a plurality of substrates 10 are adhered to each other, and the like can be easily solved. However, the number of the multi-layer films composing the respective BP surfaces 11 and the respective SLC surfaces 12 is different on account of the difference in wavelength band of infrared rays to be transmitted. Accordingly, although the formation of the BP surfaces 11 and the SLC surfaces 12 has a technical difficulty and the like, also the optical filter shown in Fig. 6 is effective if these problems can be solved.

The infrared ray detector of the invention is a selective infrared ray detector comprising the optical filter for use in HC, the optical filter for use in $CO_2$, the optical filter for use in CO and the optical filter for use in the standard gas but the central wavelengths and the half-bandwidths of the wavelength bands of infrared rays transmissible through said respective optical filters are set in the above described manners, respectively, so that the quantities of measuring signals corresponding to the respective ingredients to be measured are increased and thus the respective ingredients to be measured can be measured in high sensitivity, whereby the accuracy of measurement can be improved.

All of the respective substrates composing the respective four pieces of optical filter in the infrared ray detector have the same thickness and adhered to each other at the respective end faces thereof to form one surface, whereby four optical filters are integrated. Accordingly, in the event that infrared rays are incident upon these optical filters, the leakage of lights from the adhered end faces of the respective optical filters can be prevented. In addition, the integrated four pieces of optical filter are mounted on the holder provided with the infrared ray detecting elements mounted thereon but the respective optical filters are all arranged on one surface, so that the optical filters can be mounted on the holder without forming gaps and thus the leakage of light from the surface, where the respective optical filters are mounted on the holder. can be prevented, whereby the interference resulting from the leakage of lights and the like can be more surely prevented.

Further, all of the respective substrates of four optical filters in the infrared ray detector are made of Si, so that the thicknesses of the respective substrates can be easily equalized to each other and thus the expansion coefficient and the thermal conductivity can be made uniform, whereby the regulation of the respective optical filters in temperature can be effectively and uniformly achieved. And, since Si can be easily cut, the quantity of chippings produced by the cutting being reduced, and the size of chippings produced being relatively small, it is possible to more surely prevent the leakage of light from the adhered end faces of the substrates adhered to each other.

In the infrared ray detector the holder made of a highly heat conductive material is mounted on the temperature-regulating means and the optical filter is mounted on the surface of the holder. Accordingly, the distances from all of the optical filters mounted on the holder to the temperature-regulating means are almost equalized, so that all of the optical filters can be uniformly regulated in temperature and thus held at the constant temperature. Accordingly, the influences resulting from the temperature-change, such as the shift of the spectral characteristics of the optical filter to longer wavelengths resulting from the temperature-change, can be eliminated and thus infrared rays can be detected in high sensitivity. And, the selective infrared ray detector can reduce the interference value to improve the selectivity.

In the infrared ray detector, the infrared ray detecting element is housed in the housing portion having the concave section of the holder arranged in the case. Accordingly, even though the infrared rays, which have transmitted through the window material of the case to become the stray lights, go in the direction toward the infrared ray detecting element, they are reflected by the holder not to be incident upon the infrared ray detecting element, so that the influences, such as the interference, resulting from the incidence of the stray lights upon the infrared ray detecting element can be prevented.

In addition, in the infrared ray detector, the inner surface of the case is roughened by the sandblasting, the blackening treatment for roughening the surface and the like, so that when the infrared rays, which have become the stray lights within the case, are incident upon the inner surface of the case, they are absorbed without being reflected to be reduced, whereby the incidence of the stray lights upon the infrared ray detecting element can be more surely prevented and thus infrared rays can be detected in high accuracy.

In the infrared ray detector, all of the respective substrates of the optical filters provided for a plurality of infrared ray detecting elements, respectively, arranged within the case are made of any one of Si and Ge, having the same thickness, and being adhered to each other at the respective end faces to form one surface.

Accordingly, there is not the possibility that infrared rays are leaked from the respective adhered end faces of the substrates and thus the interference can be prevented from being produced when the infrared rays are incident upon the respective optical filters. In addition, since there is no possibility of the leakage of lights from the end faces of the substrates in such the manner, a plurality of optical filters arranged on one piece of plate can be optionally mounted on the holder of the infrared ray detecting elements and thus the optical filters can be easily mounted on the holder.

And, since all of the substrates of a plurality of optical filters are made of any one of Si and Ge, the thicknesses of the respective substrates can be easily equalized to each other, the expansion coefficient and the thermal conductivity being made uniform, and the temperature characteristics being improved, whereby the regulation of the respective infrared ray detecting elements in temperature can be efficiently achieved in case of need. In addition, in the case where the respective substrates are made of the same material and adhered to each other with adhesives, the adhering coditions are same, so that the adhesion can be easily carried out and strengthened.

If the substrates are made of Si, Si can be easily cut, the quantity of chippings produced by the cutting being reduced, and the size of chippings produced being relatively small, so that the leakage of lights from the adhered end faces of the substrates adhered to each other can be more surely prevented.

The "half-bandwidth" in the present invention is concretely described as follows giving the case of the $CO_2$ filter as an example.

As found from Fig. 5, the Peak transmittance of the $CO_2$ filter is about 86%. 1/2 times the Peak transmittance is 43% and the width at that position is about 0.18 µm.

As below described, about 4.2% is obtained by dividing this 0.18 µm by 4.3 µm as the central wavelength and then multiplying the resulting quotient by 100.

$$0.18 + 4.3 \times 100 = 4.2$$

This 4.2% is the half-bandwidth.

## Claims

1. An infrared ray detector, comprising:
   - four infrared ray detecting elements (8a - 8d),
   - a holder (6) having four housing portions (7a - 7d) each for receiving one of said infrared ray detecting elements (8a - 8d), and
   - four optical filters (9a - 9d) arranged each one in front of a respective one of said infrared ray detecting elements (8a - 8d) closing a mouth portion of said housing portion (7a - 7d), said optical filters (9a - 9d) being transmissible to wavelength bands of infrared rays absorbed by a HC gas, a $CO_2$ gas, a CO gas and a standard gas, **characterized in that**
   - each housing portion (7a - 7d) has a groove-like shape,
   - the holder (6) is positioned in a sealed case (1) such that the optical filters (9a - 9d) face an opening (3) of said case (1) which is closed by a window material (4) transmissible to infrared rays, and are positioned between the window material (4) and the respective infrared detecting elements (8a - 8d)
   - the holder is made of a highly heat conductive material and mounted with its bottom side on a temperature regulating means (14). and
   - a central wavelength and a half-bandwidth of said wavelength bands of infrared rays transmissible through the respective optical filters (9a - 9d) are set within a range of the following standard values ± about 5 %:
       Optical filter for use in HC:
           Central wavelength: 3.4 µm;
           Half-bandwidth: 8.6 %
       Optical filter for use in $CO_2$:
           Central wavelength: 4.3 µm;
           Half-bandwidth: 4.2 %
       Optical filter for use in CO:
           Central wavelength: 4.7 µm;
           Half-bandwidth: 8.6 %
       Optical filter for use in the standard gas:
           Central wavelength: 3.8 µm;
           Half-bandwidth: 3.0 %,
   wherein the half-bandwidth is defined as follows [(width of the wavelength band at half times the Peak-transmittance/central wavelength of the wavelength band) x 100].

2. The infrared ray detector as claimed in claim 1, **characterized in that** all of substrates (10) composing said respective optical filters (9a - 9d) have the same thickness and are adhered to each other at respective end faces forming one surface.

3. The infrared ray detector as claimed in claim 1, **characterized in that** only one common substrate (10a) is provided for establishing all of said optical filters (9a - 9d).

4. The infrared ray detector as claimed in claims 2 or 3, **characterized in that** all of said substrates (10) are made of Si or Ge.

5. The infrared ray detector as claimed in one of the claims 1 to 4, **characterized in that** the holder (6) is made of metal.

6. The infrared ray detector as claimed in one of the claims 1 to 5, **characterized in that** the holder (6) is coloured black.

7. The infrared ray detector as claimed in one of the claims 1 to 6, **characterized in that** the inner surface of said case (1) is roughened to make the absorption of infrared rays possible.


**Patentansprüche**

1. Infrarot-Strahlungsdetektor mit:
   - vier Infrarotstrahlen erfassenden Gliedern (8a - 8d).
   - einem Halter (6), der vier Einschnitteile (7a - 7d) hat. jeweils zur Aufnahme eines der Infrarotstrahlen erfassenden Glieder (8a - 8d). und
   - vier optischen Filtern (9a -9d), von denen jeder an der Vorderseite eines jeweiligen der Infrarotstrahlen erfassenden Glieder (8a - 8d) angeordnet ist und einen Mündungsabschnitt des Einschnitteils (7a - 7d) verschließt, wobei die optischen Filter (9a - 9d) für Wellenlängenbänder von durch HC-Gas, $CO_2$-Gas, CO-Gas und Standardgas absorbierten Infrarotstrahlen durchlässig sind,
   **dadurch gekennzeichnet, daß**
   - jeder Einschnitteil (7a - 7d) eine fugenartige Form hat.
   - der Halter (6) in einem abgedichteten Gehäuse (1) so positioniert ist, daß die optischen Filter (9a - 9d) zu einer Öffnung (3) des Gehäuses (1) weisen, die durch ein für Infrarotstrahlen durchlässiges Fenstermaterial (4) geschlossen ist, und zwischen dem Fenstermaterial (4) und dem jeweiligen Infratrotstrahlen erfassenden Glied (8a - 8d) gelegen sind,
   - der Halter aus stark wärmeleitendem Material besteht und mit seiner Bodenseite an einem Temperaturregelglied (14) befestigt ist, und
   - eine Mittenwellenlänge und eine Halbbandbreite der Wellenlängenbänder der durch die jeweiligen optischen Filter (9a - 9d) durchgehenden Infrarotstrahlen innerhalb eines Bereichs der folgenden Standardwerte ± etwa 5 % eingestellt sind:
     Optisches Filter für den Einsatz in HC:
         Mittenwellenlänge: 3,4 μm;
         Halbbandbreite: 8,6 %
     Optisches Filter für den Einsatz $CO_2$:
         Mittenwellenlänge: 4,3 μm;
         Halbbandbreite 4,2 %
     Optisches Filter für den Einsatz in CO:
         Mittenwellenlänge: 4,7 μm;
         Halbbandbreite: 8,6 %
     Optisches Filter für den Einsatz von Standardgas:
         Mittenwellenlänger: 3,8 μm
         Halbbandbreite: 3,0 %
   wobei die Halbbandbreite wie folgt definiert ist [(Breite des Wellenlängenbandes bei der Hälfte der Spitzentransmittanz/Mittenwellenlänge des Wellenlängenbandes) x 100].

2. Infrarot-Strahlungsdetektor nach Anspruch 1, **dadurch gekennzeichnet**, daß alle Substrate (1), die jeweils die optischen Filter (9a - 9d) bilden, dieselbe Dicke haben und aneinander an jeweiligen Endflächen, die eine Oberfläche bilden, zusammengeklebt sind.

3. Infrarot-Strahlungsdetektor nach Anspruch 1, **dadadurch gekennzeichnet**, daß ein gemeinsames Substrat (10a) zur Ausbildung aller optischer Filter (9a - 9d) vorgesehen ist.

4. Infrarot-Strahlungsdetektor nach Anspruch 2 oder 3, **dadurch gekennzeichnet**, daß alle diese Substrate (10) aus Si oder Ge hergestellt sind.

5. Infrarot-Strahlungsdetektor nach einem der Ansprüche 1 bis 4, **dadurch gekennzeichnet**, daß der Halter (6) aus Metall hergestellt ist.

6. Infrarot-Strahlungsdetektor nach einem der Ansprüche 1 bis 5, **dadurch gekennzeichnet**, daß der Halter (6) schwarz gefärbt ist.

7. Infrarot-Strahlungsdetektor nach einem der Ansprüche 1 bis 6, **dadurch gekennzeichnet**, daß die innere Oberfläche des Gehäuses (1) aufgerauht ist, um die Absorption von Infrarot-Strahlung möglich zu machen.

## Revendications

1. Un détecteur de rayonnement infrarouge comprenant:
   - quatre éléments de détection de rayonnement infrarouge (8a - 8d);
   - un support (6) muni de quatre parties de boîtier (7a-7d) destinées chacune à recevoir l'un desdits éléments de détection de rayonnement infrarouge (8a-8d); et
   - quatre filtres optiques (9a-9d) agencés chacun devant l'un desdits éléments de détection de rayonnement infrarouge correspondant (8a à 8d) fermant une partie d'embouchure de ladite partie de boîtier (7a à 7d), lesdits filtres optiques (9a à 9d) étant susceptibles de transmettre des bandes de longueurs d'ondes de rayonnement infrarouge absorbées par un gaz HC, un gaz $CO_2$, un gaz CO et un gaz standard, caractérisé en ce que:
   - chaque partie de boîtier (7a à 7d) présente la forme d'une rainure;
   - le support (6) est positionné dans une enveloppée fermée hermétiquement (1), de telle sorte que les filtres optiques (9a à 9d) soient situés en face d'une ouverture (3) de ladite enveloppe (1), qui est fermée par un matériau de fenêtre (4) susceptible de transmettre un rayonnement infrarouge et soient positionnés entre le matériau de fenêtre (4) et les éléments de détection de rayonnement infrarouge correspondants (8a à 8d);
   - le support est réalisé en un matériau fortement conducteur de la chaleur et est monté avec sa face inférieure sur des moyens de réglage de température (14); et
   - une longueur d'onde centrale ainsi qu'une demi-largeur de bande pour lesdites bandes de longueur d'onde du rayonnement infrarouge transmissible par les filtres optiques correspondants (9a à 9d) sont déterminées dans une gamme présentant les valeurs standard à environ ± 5%:
      Filtre optique destiné à être utilisé dans le HC:
         longueur d'onde centrale: 3,4 µm;
         demi-largeur de bande: 8,6%
      Filtre optique destiné à être utilisé dans le $CO_2$:
         longueur d'onde centrale: 4,3 µm;
         demi-largeur de bande: 4,2%
      Filtre optique destiné à être utilisé dans le CO:
         longueur d'onde centrale: 4,7 µm;
         demi-largeur de bande: 8,6%
      Filtre optique destiné à être utilisé dans le gaz standard:
         longueur d'onde centrale: 3,8 µm;
         demi-largeur de bande: 3,0%
      dans lequel la demi-largeur de bande est définie comme suit: [(largeur de la bande de longueur d'onde à la moitié de la transmittance maximale/longueur d'onde centrale de la bande de longueur d'onde) x 100].

2. Le détecteur de rayonnement infrarouge selon la revendication 1, caractérisé en ce que tous les substrats (10) composant lesdits filtres optiques correspondants (9a à 9d) présentent la même épaisseur et sont collés l'un à l'autre à des faces d'extrémité correspondantes pour former une surface.

3. Le détecteur de rayonnement infrarouge selon la revendication 1, caractérisé en ce que l'on ne prévoit qu'un seul substrat commun (10a) pour réaliser tous lesdits filtres optiques (9a à 9d).

4. Le détecteur de rayonnement infrarouge selon la revendication 2 ou 3, caractérisé en ce que tous lesdits substrats (10) sont réalisés en Si ou en Ge.

5. Le détecteur de rayonnement infrarouge selon l'une des revendications 1 à 4, caractérisé en ce que le support (6) est réalisé en métal.

6. Le détecteur de rayonnement infrarouge selon l'une des revendications 1 à 5, caractérisé en ce que le support (6) est de couleur noire.

7. Le détecteur de rayonnement infrarouge selon l'une des revendications 1 à 6, caractérisé en ce que la surface interne de ladite enveloppe (1) est rendue rugueuse afin de rendre possible l'absorption du rayonnement infrarouge.

## Fig.1

## Fig.2

# Fig.3

# Fig.4

# Fig.5

EP 0 421 304 B1

## Fig.6